(19) **Europäisches Patentamt / European Patent Office / Office européen des brevets**

(11) **EP 4 057 030 B1**

(12) # EUROPÄISCHE PATENTSCHRIFT

(45) Veröffentlichungstag und Bekanntmachung des Hinweises auf die Patenterteilung:
**14.12.2022   Patentblatt 2022/50**

(21) Anmeldenummer: **21161717.0**

(22) Anmeldetag: **10.03.2021**

(51) Internationale Patentklassifikation (IPC):
**G01S 17/36** *(2006.01)*      **G01S 17/89** *(2020.01)*
**G01S 17/931** *(2020.01)*

(52) Gemeinsame Patentklassifikation (CPC):
**G01S 17/894; G01S 7/4915; G01S 17/36**

---

(54) **OPTOELEKTRONISCHE VORRICHTUNG UND VERFAHREN ZUR ABSTANDSMESSUNG**

OPTOELECTRONIC DEVICE AND METHOD FOR MEASURING DISTANCE

DISPOSITIF OPTOÉLECTRONIQUE ET PROCÉDÉ DE MESURE DE LA DISTANCE

---

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.09.2022   Patentblatt 2022/37**

(73) Patentinhaber: **SICK AG**
**79183 Waldkirch (DE)**

(72) Erfinder: **Strepp, Wolfram**
**79106 Freiburg (DE)**

(56) Entgegenhaltungen:
**EP-A1- 3 627 184      WO-A1-2017/205170**
**US-A1- 2014 049 767**

---

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine optoelektronische Vorrichtung und ein Verfahren zur Abstandsmessung in einem Erfassungsbereich mit einem phasenbasierten Lichtlaufzeitverfahren nach dem Oberbegriff von Anspruch 1 beziehungsweise 13.

Bei einer Lichtlaufzeitmessung wird ein Lichtsignal ausgesandt und das von Objekten zurückgeworfene Lichtsignal wieder empfangen. Die dazwischen verstrichene Laufzeit ist zum Objektabstand proportional und kann anhand der Lichtgeschwindigkeit umgerechnet werden. Diese Art der Abstandsmessung wird auch als ToF (Time of Flight) oder LIDAR (Light Detection and Ranging) bezeichnet. Zu den Sensoren, die mit diesem Prinzip arbeiten, zählen Entfernungsmesser und Laserscanner. Eine 3D-Lichtlaufzeitkamera gewinnt auf diesem Wege eine Tiefeninformation mit ihren jeweiligen Pixeln. Die erfassten dreidimensionalen Bilddaten mit Abstands- oder Entfernungswerten für die einzelnen Bildpunkte werden auch als 3D-Bild, Entfernungsbild oder Tiefenkarte bezeichnet. Es sind dafür hochintegrierte TOF-Bildsensoren verfügbar.

Die zusätzliche Entfernungsdimension lässt sich in einer Vielzahl von Anwendungen nutzen, um mehr Informationen über Objekte in der von der Kamera erfassten Szenerie zu gewinnen und so verschiedene Aufgaben zu lösen. In der Automatisierungstechnik beispielsweise können anhand dreidimensionaler Bildinformationen Objekte erfasst und klassifiziert werden, um weitere automatische Bearbeitungsschritte davon abhängig zu machen, welche Objekte vorzugsweise einschließlich ihrer Position und Orientierung erkannt wurden. Damit kann beispielsweise die Steuerung von Robotern oder verschiedenartigen Aktoren an einem Förderband unterstützt werden.

Bei Fahrzeugen, die auf öffentlichen Straßen oder in abgeschlossener Umgebung speziell im Bereich der Fabrik- und Logistikautomatik verkehren, soll mit einer 3D-Kamera die gesamte Umgebung und insbesondere ein geplanter Fahrweg möglichst vollständig und dreidimensional erfasst werden. Das betrifft praktisch alle denkbaren Fahrzeuge, seien es solche mit Fahrer wie PKW, LKW, Arbeitsmaschinen und Gabelstapler oder führerlose Fahrzeuge wie AGVs (Automated Guided Vehicle), AGCs (Automated Guided Cart), AMRs (Autonomous Mobile Robot) oder Flurförderzeuge. Die Bilddaten werden genutzt, um die autonome Navigation zu ermöglichen oder einen Fahrer zu unterstützen, unter anderem um Hindernisse zu erkennen, Kollisionen zu vermeiden oder das Be- und Entladen von Transportgütern einschließlich Kartons, Paletten, Containern oder Anhängern zu erleichtern.

In der Sicherheitstechnik erfasst die 3D-Kamera Personen in der Umgebung einer Gefahrenstelle, beispielsweise einer Maschine oder speziell eines Roboters. Bei Erkennung eines unzulässigen Eingriffs in ein Schutzvolumen oder Unterschreiten eines Sicherheitsabstands zu der Maschine erfolgt eine sicherheitsgerichtete Reaktion, um einen Unfall zu vermeiden. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile. Die Sicherheitsnormen spezifizieren weiterhin sogenannte Sicherheitsniveaus oder Sicherheitsanforderungsstufen, mit denen die erreichbare Sicherheit abgestuft wird. Beispiele dafür sind SIL nach IEC61508/IEC61511 (Safety Integrity Level) mit 1 als niedrigster und 4 als höchster Stufe oder PL (Performance Level) nach EN ISO 13849-1 mit a "niedrig" bis e "hoch".

Bei einem phasenbasierten Lichtlaufzeitverfahren, auch als cw-Messverfahren oder iToF (indirect ToF) bekannt, wird die Szene mit amplitudenmoduliertem Licht einer Modulationsfrequenz typischerweise in der Größenordnung von 100 Mhz ausgeleuchtet. Das aus der Szene zurückkehrende Licht wird empfangen und mit der gleichen Frequenz demoduliert, die auch für die Modulation des Sendelichts verwendet wird (Lock-In-Verfahren). Aus der Demodulation resultiert ein Amplitudenmesswert, der einem Abtastwert des Empfangssignals entspricht. Für die Phasenbestimmung eines periodischen Signals sind nach dem Nyquist-Kriterium mindestens zwei Abtastwerte notwendig. Deshalb wird die Messung mit unterschiedlichen relativen Phasenlagen zwischen den Signalen für die sendeseitige Modulation und die empfangsseitige Demodulation durchgeführt. Damit lässt sich dann die laufzeitbedingte absolute Phasenverschiebung zwischen Sende- und Empfangssignal ermitteln, die wiederum proportional zum Objektabstand in der Szene ist.

Ein Phasenverfahren hat allerdings nur einen begrenzten Eindeutigkeitsbereich entsprechend der Periode der Modulationsfrequenz. Wegen des doppelten Lichtwegs entspricht das bei einer Modulationsfrequenz von 100 MHz eine Reichweite von lediglich 1,5 m. Um den Eindeutigkeitsbereich und damit die Reichweite zu vergrößern, wird häufig mit mehreren verschiedenen Modulationsfrequenzen gemessen. Ein alternatives Absenken der Modulationsfrequenz kommt nur in engen Grenzen in Betracht, weil dadurch die Messgenauigkeit beeinträchtigt wird. Die Messung mit mehreren Modulationsfrequenzen kombiniert eine höhere Tiefenauflösung mit einem größeren Tiefenmessbereich.

Befindet sich ein Objekt in einem Abstand jenseits des mit D bezeichneten Eindeutigkeitsbereichs, so gibt es prinzipbedingt keine Möglichkeit zu entscheiden, ob es dem Bereich [0, D), [D, 2D), ... zuzuordnen ist. Das gilt für den einfachen Eindeutigkeitsbereich bei Messung mit einer Modulationsfrequenz ebenso wie für den kombinierten Eindeutigkeitsbereich einer Messung mit mehreren Modulationsfrequenzen. Es kann daher zu Fehlmessungen kommen, wenn sich ein Objekt in einem größeren Abstand jenseits der eigentlichen Reichweite des ersten Eindeutigkeitsobjekts [0, D) befindet. Ein einfaches, auf die quadratische Entfernungsabnahme abgestimmtes Intensitätsfilter kann derartige Objekte nicht verlässlich ausfiltern, insbesondere wenn es sich um ein sehr helles Objekt oder eine glänzende oder gar retroreflektierende Fläche handelt. Dann verbleibt trotz des großen Abstands noch eine relevante und verwechselbare Signalintensität. Diese Ununterscheidbarkeit stellt vor allem die sicherheitstechnische Verwendung in Frage, da fehlerhafte Zuordnungen von Messwerten entfernter Objekte in den Nahbereich die Funktion des Gerätes erheblich beinträchtigen können oder es für die Verwendung im sicherheitstechnischen Kontext unbrauchbar machen.

Theoretisch ist durch geeignete Wahl von Modulationsfrequenzen ein sehr großer Eindeutigkeitsbereich erzielbar. In der Praxis mit realen, verrauschten Signalen führt das jedoch nicht immer zu brauchbaren, genauen Messergebnissen. Die US 2014/0049767 A1 offenbart ein Verfahren für die geometrische Phasenrekonstruktion (phase unwrapping) eines Lichtlaufzeitsystems, die deshalb gerade keinen maximalen Eindeutigkeitsbereich anstrebt, sie nennt für diesen aus ihrer Sicht zu überwindenden Fall das Beispiel zweier Frequenzen von 31 MHz und 50 MHz. Stattdessen werden ganz gezielt Frequenzen verwendet, die aus einer vergleichsweise großen gemeinsamen Basisfrequenz a abgeleitet sind, insbesondere drei Frequenzen $f_1=am_1$, $f_2=am_2$ und $f_3=am_3$ mit kleinen, zueinander teilerfremden ganzen Zahlen $m_1$, $m_2$, $m_3$. Durch die Anwendung derartiger Verfahren kommt der Eindeutigkeitsbereich dann trotz Messung mit mehreren Modulationsfrequenzen wieder in Größenordnungen von beispielsweise zehn oder zwanzig Metern, in dem Objekte im Abstand jenseits des Eindeutigkeitsbereichs von durchaus großer praktischer Relevanz sein können. Dazu hat aber die US 2014/0049767 A1 keine Lösung.

Die EP 3 736 601 A1 befasst sich mit der Bestimmung der Entfernung eines Objekts unter Berücksichtigung von Kantentreffern. Dabei wird die Entfernung phasenbasiert mit zwei Frequenzen gemessen. Zusätzlich werden die jeweiligen Amplituden ausgewertet, die sich bei Kantentreffern des Taststrahls mit jeweils einem Teilquerschnitt auf Objekten in unterschiedlichen Entfernungen von vollen Treffern des gesamten Querschnitts auf ein Objekt in ein und derselben Entfernung unterscheiden. Zum Eindeutigkeitsbereich trägt das Dokument aber außer einer Erwähnung der üblichen Herangehensweise mit mehreren Modulationsfrequenzen nicht bei.

In der US 2018/0210070 A1 wird eine aktive helligkeitsbasierte Strategie für das Auffinden ungültiger Pixel in Lichtlaufzeitsystemen beschrieben. Das zielt auf Mehrwegeausbreitung und Bewegungsartefakte (motion blur). Ähnlich wie in EP 3 736 601 A1 werden dabei die Amplituden mit ausgewertet, um dann Pixel auf "invalid" zu setzen, wenn diese Amplituden auf eine Mischung von angetasteten Entfernungen schließen lassen. Erneut wird auf die oben geschilderte Problematik von Empfangssignalen eines Objekts jenseits des Eindeutigkeitsbereichs nicht eingegangen und lediglich kurz die Möglichkeit angesprochen, den Eindeutigkeitsbereich durch mehrere Modulationsfrequenzen zu vergrößern.

Die WO 2017/205170 A1 offenbart ein LiDAR-System mit einem frequenzmodulierenden Sender und einem Quadraturempfänger. In einer Ausführungsform wird das Sendesignal gemäß einer Rampe von einer ersten Frequenz zu einer zweiten Frequenz moduliert. Das Empfangssignal des Quadraturempfängers wird einer Spektralanalyse unterzogen, die in einer FFT eine Filterbank mit diskreten Abstandsbins implementiert.

Die EP 3 627 184 A1 beschreibt ein Laserradar, das ein FMCW-Verfahren einsetzt.

Es ist daher Aufgabe der Erfindung, die Entfernungsmessung mit einem phasenbasierten Lichtlaufzeitverfahren zu verbessern.

Diese Aufgabe wird durch eine optoelektronische Vorrichtung, insbesondere 3D-Lichtlaufzeitkamera, und ein Verfahren zur Abstandsmessung in einem Erfassungsbereich mit einem phasenbasierten Lichtlaufzeitverfahren nach Anspruch 1 beziehungsweise 13 gelöst. Die Lichtlaufzeitmessung funktioniert im Kern so, wie dies einleitend beschrieben wurde. Eine Sendeeinrichtung erzeugt ein Lichtsignal, das mit einer ersten Modulationsfrequenz $f_1$ moduliert wird. Es sei vorsichtshalber gesagt, dass dies eine künstliche Amplitudenmodulation mit einer gewählten Modulationsfrequenz ist, die nicht mit der Trägerfrequenz der eigentlichen Lichtwelle verwechselt werden sollte. Das von Objekten im Erfassungsbereich zurückgeworfene Sendelicht fällt überlagert mit Fremd- oder Hintergrundlicht auf eine Empfangseinrichtung mit mindestens einem Lichtempfangselement, die daraus ein Empfangssignal erzeugt. Dabei handelt es sich insbesondere um einen Bildsensor für die Erfassung dreidimensionaler Bilddaten mit einer Vielzahl von Lichtempfangselementen oder Pixeln, die jeweils ein eigenes Empfangssignal für diesen Bildpunkt erzeugen. Bei dem zurückgeworfenen Licht wird zwischen gerichteter Reflexion und ungerichteter Remission oder Streuung begrifflich nicht unterschieden.

Eine Steuer- und Auswertungseinheit bestimmt mit einem Phasenverfahren die Lichtlaufzeit und somit einen Wert r für den Abstand, wobei eine explizite Umrechnung in metrische Daten über die Lichtgeschwindigkeit nicht zwingend erforderlich ist. Für die Phasenbestimmung wird das Empfangssignal in einem Lock-In-Verfahren mit der bereits für das ausgesandte Lichtsignal verwendeten ersten Modulationsfrequenz $f_1$ demoduliert. Die Demodulation kann bereits in dem Lichtempfangselement beziehungsweise in den Pixeln eines Bildsensors implementiert sein, die dann auch als ToF-Pixel (ToF, Time of Flight, Lichtlaufzeit) oder Lock-in-Pixel bezeichnet werden. Auch weitere Funktionalität der Steuer- und Auswertungseinheit kann bereits in die Empfangseinrichtung, insbesondere auf einem gemeinsamen Chip integriert sein. Eine alternative, der Empfangseinrichtung nachgelagerte weitere Verarbeitung ist auch möglich, beispielsweise in einem FPGA (Field-Programmable Gate Array).

Zusätzlich zu der Lichtlaufzeitmessung wird eine Amplitudenbewertung vorgenommen, um Fehlmessungen zu finden. Es könnte aus unterschiedlichen Gründen sein, dass der gemessene Abstand fehlerhaft ist, und zwar nicht im Sinne von Messfehlern, sondern ganz von dem realen Abstand verschieden. Dazu wird mindestens die erste Amplitude zu der mindestens ersten Modulationsfrequenz $f_1$ aus dem Empfangssignal bestimmt und bewertet.

Die Erfindung geht von dem Grundgedanken aus, eine besondere Fehlmessung festzustellen und vorzugsweise auch zu korrigieren, nämlich ob der Abstand zu einem Objekt außerhalb eines ersten Eindeutigkeitsbereichs [0, D) gemessen wurde. Etwas formaler ausgedrückt befindet sich ein Objekt womöglich in der Realität im Abstand r+nD, n>1, und wurde fälschlich viel zu nahe im Abstand r gemessen. Das ist eine ganz andere Art von Fehlmessung als Mehrwegeausbreitung oder Bewegungsartefakte, und die Aufdeckung bedarf besonderer Maßnahmen.

Statt mit einer fixen Modulationsfrequenz $f_1$ zu messen, oder in später vorzustellenden Ausführungsformen mit mehreren fixen Modulationsfrequenzen $f_1$, $f_2$, ..., wird die Modulationsfrequenz selbst während einer Lichtlaufzeitmessung verändert. Das kann als Frequenzmodulation bezeichnet werden, aber dieser Begriff wird im Folgenden wegen der Dopplung einer frequenzmodulierten Modulationsfrequenz vermieden und stattdessen von einer Frequenzspreizung gesprochen (Spread Spectrum). Jedenfalls wird die Modulationsfrequenz variiert, gestreut oder verjittert, und das schlägt sich aus später noch erläuterten Gründen in einer verringerten ersten Amplitude nieder. Die Frequenzspreizung darf auch nicht mit mehreren Messungen bei mehreren Modulationsfrequenzen $f_i$ verwechselt werden, es geht um eine schnelle Veränderung innerhalb ein und derselben Messung einer Phasenlage, nachfolgende Messungen mit weiteren Modulationsfrequenzen $f_i$ können in sich wieder mit einer gleichen, anderen oder keiner Frequenzspreizung modifiziert werden.

Die durch die Frequenzspreizung bewirkte Verringerung mindestens der ersten Amplitude wird bewertet. Die Auswirkung der Frequenzspreizung auf die erste Amplitude lässt sich berechnen, es gibt folglich dafür eine Erwartungshaltung an die erste Amplitude im ersten Eindeutigkeitsbereich [0, D) beziehungsweise in ferneren Abstandsbereichen [D, 2D), [2D, 3D), ... Aus dieser Erwartungshaltung kann ein konstantes oder wiederum abstandsabhängiges Amplitudenkriterium abgeleitet werden, und durch Vergleich mit der gemessenen ersten Amplitude oder einem daraus abgeleiteten Wert wird die gemessene Lichtlaufzeit dem ersten Eindeutigkeitsbereich [0, D) oder einem ferneren Abstandsbereich [D, 2D), [D, 3D), ... zugewiesen.

Die Erfindung hat den Vorteil, dass Fehlmessungen durch Objekte jenseits des ersten Eindeutigkeitsbereichs zuverlässig erkannt werden. Insbesondere kann zwischen Objekten in dem ersten Eindeutigkeitsbereich [0, D) und in den dahinterliegenden Eindeutigkeitsbereichen [D, 2D), [2D,3D) ... unterschieden werden. Dies erfordert keine grundlegenden Änderungen des Messprinzips, sondern nur eine Erweiterung der Modulation von einer reinen Amplitudenmodulation um eine Frequenzmodulation beziehungsweise Frequenzspreizung. Der daraus resultierende Abfall der gemessenen Amplituden ist demnach kein von der Messsituation abhängiger Störeffekt, wie dies bei Mehrwegeausbreitung oder Bewegungsartefakten der Fall wäre. Vielmehr wird dadurch ganz gezielt und reproduzierbar eine zusätzliche Abstandsinformation in den Amplituden erzeugt. Das Problem der Eindeutigkeitsbereiche tritt selbst unter idealen Messbedingungen auf, es ist in einem anderen Sinne eine Fehlmessung als Mehrwegeausbreitung oder Bewegungsartefakte, und korrespondierend zu diesem intrinsischen Problem des Messprinzips wird eine Amplitudeninformation aufgeprägt und ausgewertet, die ebenso auf Idealbedingungen bezogen ist. Das bedeutet natürlich nicht, dass es nicht möglich und sinnvoll ist, die Amplitudeninformation so robust auszuwerten, dass auch unter realen, gestörten Messbedingungen der richtige Eindeutigkeitsbereich gefunden wird.

Die erfindungsgemäß aufgedeckten Fehlmessungen sind im Übrigen nur im ersten Schritt fehlerhaft. Wiederum im Gegensatz zur Mehrwegeausbreitung oder zu Bewegungsartefakten lässt sich feststellen, welcher Fehler gemacht wurde, und deshalb müssen solche Messungen nicht verworfen oder Pixel ungültig gekennzeichnet werden, sondern es kann ein neuer, korrigierter Abstandswert zugewiesen werden. Die Frequenzspreizung verbessert die elektromagnetische Verträglichkeit (EMV) und Koexistenz mit weiteren ähnlichen oder baugleichen Systemen. Das ist im Zusammenhang mit der Erfindung nicht das primäre Ziel, nichtsdestotrotz sind es synergistische Vorteile.

Die Steuer- und Auswertungseinheit ist bevorzugt dafür ausgebildet, die mindestens erste Modulationsfrequenz $f_1$ mit einer monotonen Funktion über den ersten Schwankungsbereich zu verändern, insbesondere einer Rampe oder einem sinusförmigen Verlauf. Eine Möglichkeit, die Frequenzspreizung formal anzugeben, ist eine Funktion $\Delta f(t)$, die zu der Modulationsfrequenz addiert wird. Diese Funktion ist vorzugsweise monoton, jedenfalls für ein gewisses Zeitintervall, um ein- oder mehrmals den Schwankungsbereich durchzugehen. Beispiele dafür sind eine Rampe oder ein Sinusverlauf, die jeweils einmal oder mehrmals von unten nach oben, von oben nach unten oder hin und her den Schwankungsbereich durchlaufen. Die Funktion ist vorzugsweise offsetfrei oder symmetrisch um Null, um die durchschnittliche oder effektive Modulationsfrequenz nicht zu verschieben, oder andernfalls sollte die neue effektive Modulationsfrequenz bei der Laufzeitbestimmung berücksichtigt werden.

Die Steuer- und Auswertungseinheit ist bevorzugt dafür ausgebildet, ein Lichtsignal mit mindestens einer zweiten Modulationsfrequenz $f_2$ zu modulieren und wieder zu empfangen. Durch das Messen mit mehreren Modulationsfrequenzen lässt sich der Eindeutigkeitsbereich erweitern und/oder die Messgenauigkeit verbessern, wie dies einleitend erläutert wurde. Die Frequenzen können vorzugsweise nach der Lehre der einleitend zitierten US 2014/0049767 A1 gewählt werden, d.h. es gibt eine gemeinsame Basisfrequenz a typischerweise im Bereich einiger bis zwanzig MHz, und die mehreren Modulationsfrequenzen sind Vielfache $am_1$, $am_2$... davon, mit bevorzugt paarweise zueinander teilerfremden, ganzzahligen $m_1$, $m_2$, ... Mit der in US 2014/0049767 A1 vorgestellten Phasenrekonstruktion wird nicht zwangsläufig der Eindeutigkeitsbereich erweitert. Beispielsweise ist denkbar, dass die niedrigste Frequenz ihren vergleichsweise großen Eindeutigkeitsbereich und die übrigen Frequenzen, insbesondere die höchste Frequenz, ihre höhere Messgenauigkeit beisteuern.

Die Steuer- und Auswertungseinheit ist bevorzugt dafür ausgebildet, aus dem Empfangssignal zu der mindestens zweiten Modulationsfrequenz $f_2$ mindestens eine zweite Amplitude zu bestimmen und zu bewerten. Bei einer Messung mit mehreren Modulationsfrequenzen wird also vorzugsweise jeweils eine zugehörige Amplitude bestimmt und ebenfalls bewertet, um den richtigen Eindeutigkeitsbereich zu finden.

Die Steuer- und Auswertungseinheit ist bevorzugt dafür ausgebildet, die zweite Modulationsfrequenz $f_2$ in einem zweiten Schwankungsbereich ungleich dem ersten Schwankungsbereich zu verändern. Für mehrere Modulationsfrequenzen werden demnach unterschiedliche Frequenzspreizungen verwendet. Bei mehr als zwei Modulationsfrequenzen können sich Frequenzspreizungen wiederholen, oder jede Modulationsfrequenz hat ihre eigene Frequenzspreizung. Alternativ wird für alle Modulationsfrequenzen die gleiche Frequenzspreizung verwendet. Die Frequenzspreizung kann absolut oder relativ verstanden werden. Folglich wird eine Funktion $\Delta f(t)$ fest vorgegeben, oder es wird ein relativer Schwankungsbereich beispielsweise von einigen Prozent der jeweiligen Modulationsfrequenz vorgegeben, an den der Verlauf von $\Delta f(t)$ angepasst wird. Es ist denkbar, dass zumindest eine Modulationsfrequenz keine Frequenzspreizung erfährt. Die Unterschiedlichkeit ist in der Praxis von den durch die Frequenzspreizung bewirkten Amplitudenveränderungen her zu denken. Das kann durchaus auch gleiche prozentuale Schwankungsbereiche bedeuten, die wegen der unterschiedlichen zugehörigen Modulationsfrequenzen unterschiedliche Effekte haben.

Die Steuer- und Auswertungseinheit ist bevorzugt dafür ausgebildet, die erste Amplitude anhand einer abstandsabhängigen Amplitudenverlustfunktion $h(r)$ des Verhältnisses der Amplitude mit veränderter Modulationsfrequenz zu Amplitude bei konstanter Modulationsfrequenz zu bewerten, insbesondere die i-te Amplitude jeweils anhand einer abstandsabhängigen Amplitudenverlustfunktion $h_i(r)$ je Modulationsfrequenz $f_i$. Bezeichnet man die Amplitude bei Frequenzspreizung mit $I_{int}$ und die Amplitude ohne Frequenzspreizung mit I, so gibt $h(r) = I_{int}(r)/I(r)$ gerade den normierten abstandsabhängigen Amplitudenverlust durch die Frequenzspreizung an. Aus dem $h(r)$ für eine Modulationsfrequenz $f_1$ oder den $h_i(r)$ für mehrere Modulationsfrequenzen $f_i$ lässt sich ein Kriterium ableiten, in welchem Eindeutigkeitsbereich ein gemessener Abstand liegt, insbesondere eine Schwelle. Die Amplitudenverlustfunktion ist eine Erwartungshaltung, die i-te Amplitude ist ein jeweiliger Messwert, der gegen diese Erwartungshaltung geprüft wird, um den passenden Eindeutigkeitsbereich zu finden. Mit der Amplitudenverlustfunktion werden die verschiedenen Modulationsfrequenzen $f_i$ zunächst einzeln angeschaut, wobei im Falle mehrerer Modulationsfrequenzen anschließend eine gemeinsame Entscheidung zu treffen ist.

Die Steuer- und Auswertungseinheit ist bevorzugt dafür ausgebildet, die i-ten Amplituden zu mehreren Modulationsfrequenzen $f_i$ mit einer Kombinationsvorschrift miteinander zu verrechnen und anhand einer entsprechend der Kombinationsvorschrift zusammengefassten Amplitudenbewertungsfunktion $k(r)$ für alle verwendeten Modulationsfrequenzen $f_i$ zu bewerten. Die Amplitudenbewertungsfunktion $k(r)$ fasst vorteilhaft die Erwartungshaltungen für mehrere verwendete Modulationsfrequenzen zusammen, wobei wie schon bei $h(r)$ nicht die Amplitudenbewertungsfunktion $k(r)$ selbst die Erwartungshaltung sein muss, sondern daraus beispielsweise eine Schwelle abgeleitet werden kann. Entsprechend werden die jeweils gemessenen i-ten Amplituden miteinander kombiniert und so in einem Schritt gemeinsam mit einer Erwartungshaltung verglichen. Die Kombinationsvorschrift verknüpft mehrere Eingangsgrößen, wie im Falle einer Summe, wobei sogleich geeignete Kombinationsvorschriften vorgestellt werden. Das lässt sich sowohl auf die Amplitudenverlustfunktionen $h_i(r)$ wie auf die gemessenen i-ten Amplituden anwenden.

Die Kombinationsvorschrift ist bevorzugt ein Verhältnis oder Quotient. Das hat den Vorteil, dass sich Größen wie der rein abstandsabhängige, üblicherweise quadratisch abfallende Intensitätsverlauf und das Remissionsvermögen herauskürzen. Allgemein sind im Zähler und Nenner beliebige Funktionen, vorzugsweise Linearkombinationen oder einzelne Beiträge möglich. Besonders bevorzugt ist die Kombinationsvorschrift ein Verhältnis oder Quotient aus einem Streumaß und einem Normierungsmaß. Ein beispielhaftes Streumaß ist die Differenz aus Maximum und Minimum oder die Standardabweichung beziehungsweise zur einfacheren Berechnung eine Quadratsumme entsprechend der Varianz, ein beispielhaftes Normierungsmaß das Maximum, die Summe oder der Mittelwert.

Die Kombinationsvorschrift berücksichtigt bevorzugt nur die größte und/oder die kleinste Modulationsfrequenz. Anders als im Falle unwägbarer Messfehler, die etwa durch Mehrwegeausbreitung oder Bewegungsartefakte verursacht werden, ist der durch die Frequenzspreizung eingeführte Amplitudenverlust bekannt und vorhersagbar. Deshalb muss insbesondere ein Maximum oder Minimum nicht dynamisch bestimmt werden. Es ist vielmehr von vornherein bekannt, welche Modulationsfrequenz durch die Frequenzspreizung den größten und kleinsten Amplitudenverlust erfährt, und dies ist zumindest über große Abstandsbereiche unverändert, die einen Eindeutigkeitsbereich überdecken. Sofern nicht für alle Modulationsfrequenzen die gleiche Schwankungsbreite der Frequenzspreizung verwendet wird beziehungsweise die gleichen resultierenden Amplitudenverluste bewirkt werden, ist dies zu berücksichtigen, da es die Verhältnisse relativieren oder gar umkehren kann. Jedenfalls kann wegen der bekannten und reproduzierbaren Amplitudenverluste die Kombinationsvorschrift vereinfacht werden, indem und nur ganz gezielt die Größen zu bestimmten Modulationsfrequenzen verwendet werden und insbesondere eine oder einige Modulationsfrequenzen in dieser Hinsicht unberücksichtigt bleiben.

Die Steuer- und Auswertungseinheit ist bevorzugt dafür ausgebildet, die Amplitude anhand einer Schwelle zu bewerten. Das ist ein sehr einfaches und mit wenig Aufwand überprüfbares Kriterium. Die Schwelle wird vorzugsweise anhand der Amplitudenverlustfunktionen $h_i(r)$ beziehungsweise der Amplitudenbewertungsfunktion $k(r)$ gefunden und trennt insbesondere den ersten Eindeutigkeitsbereich [0, D) von den ferneren Eindeutigkeitsbereichen [D, 2D) ...

Die Schwelle ist vorzugsweise eine Funktion des Abstands. Mit dieser Formulierung soll an dieser Stelle eine mathematisch noch denkbare konstante Funktion ausgeschlossen werden, die abstandsabhängige Schwelle passt sich somit genauer an und ermöglicht eine noch bessere Unterscheidung.

Die Steuer- und Auswertungseinheit ist bevorzugt dafür ausgebildet, den gemessenen Abstand einer Fehlmessung um ein Vielfaches des Eindeutigkeitsbereichs zu korrigieren. Wird mit dem erfindungsgemäßen Vorgehen festgestellt, dass sich ein Objekt in einem Abstand jenseits des ersten Eindeutigkeitsbereichs [0, D) befindet, wird diese Messung vorzugsweise nicht verworfen oder das betroffene Pixel ungültig gekennzeichnet. Stattdessen wird der Messwert um die Ausdehnung D des Eindeutigkeitsbereichs korrigiert, also der neue Abstand auf r+nD gesetzt. Die gemessenen i-ten Amplituden ermöglichen grundsätzlich sogar die Bestimmung des n>1, so dass das richtige Vielfache der Ausdehnung D des Eindeutigkeitsbereichs addiert werden könnte. In einer bevorzugten Ausführungsform wird jedoch einfach D mit n=1 addiert, der Messwert also auf r+D gesetzt. Das ist der wahrscheinlichste Fall, weil noch fernere Objekte auch mit sehr hohem Remissionsvermögen wegen des quadratischen abstandsabhängigen Intensitätsabfalls kaum noch erfasst werden. Es ist jedenfalls in sicherheitstechnischer Anwendung die konservative Annahme, die bei einer Annäherungsbewegung genug Gelegenheit bietet, das Objekt zu einem späteren Zeitpunkt nochmals zu messen, spätestens wenn es dann im ersten Eindeutigkeitsbereich angekommen ist. Für hochgenaue quantitative Messungen über große Reichweiten sollte ohnehin besser der Eindeutigkeitsbereich selbst erweitert werden, etwa durch Verwendung zusätzlicher Modulationsfrequenzen. Wenn durch die Erfindung der Eindeutigkeitsbereich zumindest praktisch verdoppelt wird, ist das bereits ein großer Gewinn.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Blockdarstellung einer 3D-Lichtlaufzeitkamera;

Fig. 2    eine Darstellung der Abstandsmessung für ein Objekt innerhalb und außerhalb eines ersten Eindeutigkeitsbereichs;

Fig. 3    eine beispielhafte mit einer 3D- Lichtlaufzeitkamera gemessene Tiefenkarte mit Fehlmessungen durch Mehrdeutigkeiten;

Fig. 4    eine beispielhafte Frequenzspreizung;

Fig. 5a-c    Zeigerdiagramme zur Veranschaulichung der Auswirkungen einer Frequenzspreizung unterschiedlichen Ausmaßes auf die Amplitude;

Fig. 6    eine beispielhafte Darstellung einer Amplitudenverlustfunktion h(r) aufgrund einer Frequenzspreizung;

Fig. 7    eine beispielhafte Darstellung mehrerer Amplitudenverlustfunktionen $h_i(r)$ für mehrere Modulationsfrequenzen $f_i$;

Fig. 8    eine Darstellung einer zusammenfassenden Amplitudenbewertungsfunktion k(r) überlagert mit den Amplitudenverlustfunktionen h(r) gemäß Figur 7;

Fig. 9    eine Darstellung der Amplitudenbewertungsfunktion k(r) gemäß Figur 8 nun in einer zyklischen Darstellung über mehrere Eindeutigkeitsbereiche und mit einer konstanten Schwelle für den ersten Eindeutigkeitsbereich;

Fig. 10    eine Darstellung ähnlich Figur 9 nun mit abstandsabhängiger Schwelle; und

Fig. 11    die beispielhafte Tiefenkarte gemäß Figur 3 nach Korrektur der Mehrdeutigkeiten.

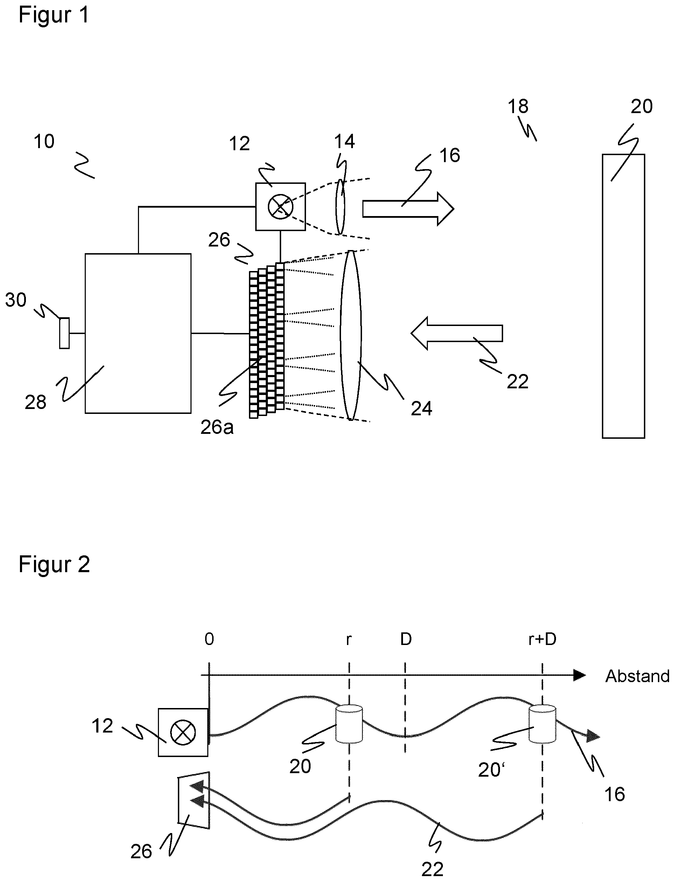

Figur 1 zeigt eine schematische Blockdarstellung einer als 3D-Lichtlaufzeitkamera ausgebildeten Kamera 10. Die Erfindung wird am Beispiel der Kamera 10 erläutert, ist aber allgemein für phasenbasierte Lichtlaufzeitverfahren auch in anderen Sensoren einsetzbar, beispielsweise einem entfernungsmessenden Lichttaster, einem Laserscanner mit rotierendem Drehspiegel oder Messkopf oder einem Solid-State-Laserscanner.

Eine Beleuchtungseinheit 12 sendet durch eine Sendeoptik 14 moduliertes Sendelicht 16 in einen Erfassungsbereich 18 aus. Als Lichtquelle kommen LEDs oder Laser in Form von Kantenemittern oder VCSEL in Betracht. Die Beleuchtungseinheit 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation.

Trifft das Sendelicht 16 in dem Erfassungsbereich 18 auf ein Objekt 20, so wird ein Teil als Empfangslicht 22 zu der Kamera 10 zurückgeworfen und dort durch eine Empfangsoptik 24, beispielsweise eine Einzellinse oder ein Empfangsobjektiv, auf einen Bildsensor 26 geführt. Der Bildsensor 26 weist eine Vielzahl von Empfangselementen oder Empfangspixeln 26a auf. Die Auflösung des Bildsensors 26 kann von zwei oder einigen wenigen bis hin zu tausenden oder Millionen Empfangspixeln 26a reichen. Die Pixelanordnung ist typischerweise eine Matrix, so dass sich eine laterale Ortsauflösung in einer X-Richtung und einer Y-Richtung ergibt, was sich mit der Z-Richtung der Abstandsmessung zu den dreidimensionalen Bilddaten ergänzt. Diese 3D-Erfassung ist vorzugsweise gemeint, wenn von einer 3D-Kamera, einer 3D-Lichtlaufzeitkamera oder dreidimensionalen Bilddaten gesprochen wird. Prinzipiell sind aber auch andere Pixelanordnungen denkbar, etwa eine Pixelzeile, die in einer Matrix ausgewählt wird oder die den ganzen Bildsensor einer Zeilenkamera bildet.

Die Empfangspixel 26a umfassen jeweils eine lichtempfindliche Fläche und mindestens einen Ladungsspeicher, beispielsweise einen Kondensator. Dabei wird in einem Lock-In-Verfahren mit einer Demodulationsfrequenz entsprechend der für das Sendelicht 16 verwendeten Modulationsfrequenz gesteuert, wann während einer Messdauer oder Integrationszeit in einem jeweiligen Ladungsspeicher die von dem einfallenden Empfangslicht 22 erzeugten Ladungen aufgesammelt werden.

Die Ladungsmengen in den Ladungsspeichern der Empfangspixel 26a werden ausgelesen, digitalisiert und an eine Steuer- und Auswertungseinheit 28 übergeben. Um zusätzliche Abtastwerte für eine Phasenbestimmung zu gewinnen, wird die beschriebene Teilmessung mit Sammeln und Auslesen von Ladungsspeichern n-mal wiederholt, vorzugsweise zwei bis vier Mal. Die Phase zwischen der für das Sendelicht 16 verwendeten Modulationsfrequenz und der für das Lock-In-Verfahren verwendeten Demodulationsfrequenz wird dabei jeweils variiert. Mehrere Ladungsspeicher können derartige Teilmessungen in gewisser Weise ersetzen, da sie bereits innerhalb derselben Teilmessung mehrere Abtastwerte erzeugen, oder die Ladungsspeicher werden für differentielle Messungen genutzt, mit der gewisse Asymmetrien im Pixelaufbau kompensiert werden. Bevorzugte Konstellationen für die Abtastwerte sind Messungen mit Phasen 0°, 90°, 180° und 270° oder 0°, 120° und 240°.

Aus den mehreren Abtastwerten rekonstruiert nun die Steuer- und Auswertungseinheit 28 den Phasenversatz aufgrund der Lichtlaufzeit durch den Erfassungsbereich 18, der in einen Abstandswert je Empfangspixel 26a umgerechnet werden kann. Es entsteht ein dreidimensionales Bild, Abstandsbild oder Tiefenbild, das an einer Schnittstelle 30 ausgegeben wird. Die Schnittstelle 30 oder alternativ eine oder mehrere weitere, nicht gezeigte Anschlüsse dienen umgekehrt der Eingabe von Steuersignalen oder Parametrierungen der Kamera 10.

Die Aufteilung der Figur 1 in einen Bildsensor 26 mit Empfangspixeln 26a, die jeweils selbst demodulieren, und eine Steuer- und Auswertungseinheit 28 ist nur eine bevorzugte Ausführungsform. Dies ermöglicht hochintegrierte Bildsensoren 26, in die bereits das Modulationssignal für die Beleuchtungseinheit 12, das Demodulationssignal und zumindest ein Teil der weiteren Messtechnik integriert ist. Die Steuer- und Auswertungsfunktionalität kann aber auch anders verteilt sein, indem beispielsweise die Steuer- und Auswertungseinheit 28 sich um zumindest einen Teil dieser Aufgaben eines dann einfacheren Bildsensors 26 kümmert. Die Steuer- und Auswertungseinheit 28 muss auch keineswegs monolithisch aus einem einzigen Baustein bestehen wie dargestellt, sondern kann aus einem oder mehreren digitalen Rechenbausteinen zusammengesetzt sein, wie Mikroprozessoren, FPGAs (Field-Programmable Gate Array) oder ASICs (Application-Specific Integrated Circuit). Weiterhin ist die dargestellte Beleuchtung eine Flächenbeleuchtung, wozu beispielsweise ein Diffusor als Teil der Sendeoptik 14 eingesetzt wird. In einer anderen Ausführungsform wird eine Anordnung zahlreicher Einzellichtquellen der Beleuchtungseinheit 12 scharf in den Erfassungsbereich 18 projiziert, so dass im Ergebnis die Empfangspixel 26a einzeln beleuchtet werden und die Reichweite sich erhöht. Weiterhin kann die Beleuchtung abweichend von der Darstellung nicht in die Kamera 10 integriert, sondern davon baulich beziehungsweise räumlich getrennt werden.

Figur 2 illustriert eine Abstandsmessung für ein Objekt 20 innerhalb eines ersten Eindeutigkeitsbereichs (unambiguity range) und ein Objekt 20' außerhalb des ersten Eindeutigkeitsbereichs beispielhaft im zweiten Eindeutigkeitsbereich. Bei einer Abstandsmessung wird die sich durch die Lichtlaufzeit ergebende Phasenverschiebung $\varphi$ zwischen dem Sendelicht 16 und dem von dem Objekt 20, 20' reflektierten Empfangslicht 22 bestimmt:

$$\varphi = 4\pi f r/c = 2\pi r/D,$$

mit $D = c/(2f)$ bei der Modulationsfrequenz f und der Lichtgeschwindigkeit c.

Wegen der $2\pi$-Periodizität der Modulationsfrequenz erzeugen aber beide Objekte 20, 20' im tatsächlich unterschiedlichen Objektabstand r und r+D dieselbe Phasenverschiebung. Allgemein ergibt sich für $r = d + n * D$, n = 0, 1, .. :

$$2\pi(d + nD)/D = 2\pi d/D + 2\pi n \equiv \varphi.$$

Die Phasenmessung hat folglich nur einen begrenzten Eindeutigkeitsbereich D oder einen ersten Eindeutigkeitsbereich [0, D), einen zweiten Eindeutigkeitsbereich [D, 2D) und weitere Eindeutigkeitsbereiche. An dieser Stelle ist die Sprache nicht immer ganz sauber, es wird manchmal einfach ein nicht weiter qualifizierter Eindeutigkeitsbereich verwendet, der dann den ersten Eindeutigkeitsbereich [0, D) meint. Durch Wahl einer kleinen Modulationsfrequenz f kann der Eindeutigkeitsbereich vergrößert werden, aber nur um den Preis einer geringeren Messauflösung. Daher werden vorzugsweise Messungen bei zwei bis drei oder mehr Modulationsfrequenzen durchgeführt, um in Kombination der Messungen den Eindeutigkeitsbereich zu vergrößern und/oder eine hohe Messgenauigkeit zu erhalten. Das wurde einleitend bereits diskutiert. Auch nach derartigen Maßnahmen verbleibt aber ein begrenzter Eindeutigkeitsbereich, so dass sich die Situation grundlegend weiterhin so darstellt wie in Figur 2.

Üblicherweise wird eine Abstandsmessung dem ersten Eindeutigkeitsbereich [0 D) mit n=0 zugeordnet. Ein weiter entfernt liegendes Objekt 20' weist normalerweise nur eine kleine Signalintensität I auf und wird entweder gar nicht erst erfasst oder kann durch eine Rauschschwelle aussortiert werden. Insbesondere bei Objekten 20' mit hohem Remissionsvermögen, bei glänzenden Flächen, Reflektoren oder gar Retroreflektoren verbleibt aber trotz der größeren Entfernung eine ausreichende Signalintensität. Das Objekt 20' wird dann fälschlich im Abstand r statt im eigentlichen Abstand r+D gemessen. Das führt dann womöglich zu Fehlern bei der Bewertung der Szene, und in sicherheitstechnischer Anwendung womöglich zu kritischen Fehlern oder jedenfalls unnötigen sicherheitsgerichteten Maßnahmen. Fehler höherer Ordnung, d.h. mit n>1, sind ebenfalls denkbar, hier wird sich aber meist der abstandsabhängige Intensitätsabfall durchsetzen.

Die erläuterte Mehrdeutigkeit ist eine intrinsische Eigenschaft eines Phasenmessverfahrens und wird herkömmlich hingenommen, und es wird stattdessen mit den erläuterten Methoden durch kleine und/oder mehrere Modulationsfrequenzen der Eindeutigkeitsbereich erweitert. Das verhindert jedoch nicht die Erfassung eines Objekts 20' außerhalb des resultierenden ersten Eindeutigkeitsbereichs. Nachfolgend wird das erfindungsgemäße Vorgehen vorgestellt, um das Objekt 20, 20' dem richtigen Eindeutigkeitsbereich zuzuordnen oder jedenfalls festzustellen, ob sich ein Objekt 20, 20' tatsächlich im ersten Eindeutigkeitsbereich befindet.

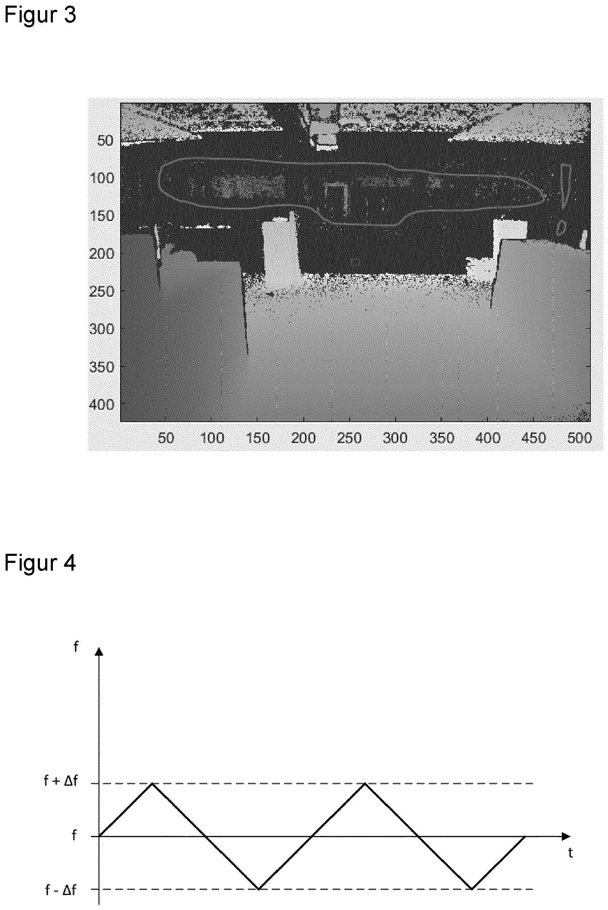

Figur 3 zeigt zunächst eine beispielhafte falschfarben- beziehungsweise graucodierte Tiefenkarte ohne die erfindungsgemäße Korrektur. Im Rückraum der Szene sind eingekreist und mit einem Ausrufezeichen markiert Bereiche erkennbar, bei denen die Mehrdeutigkeit eine fehlerhafte Zuordnung in den Nahbereich verursacht. Das gibt den eigentlich fernen Objekten bei einer Szenenbewertung eine falsche Bedeutung. In sicherheitstechnischer Auswertung mit Schutzfeldern oder dergleichen kann dies mit hoher Wahrscheinlichkeit zu sicherheitsgerichteten Abschaltungen oder sonstigen unnötigen Absicherungsmaßnahmen und damit zu Verfügbarkeitsproblemen führen.

Figur 4 zeigt eine beispielhafte, für die Lösung der Eindeutigkeitsproblematik eingeführten Frequenzspreizung. Dabei bedeutet Frequenzspreizung (spread spectrum), dass die Beleuchtungseinheit 12 das Sendelicht 16 nicht mit einer festen Frequenz f moduliert, sondern diese Frequenz gezielt zusätzlich zeitabhängig variiert, moduliert oder verjittert. Herkömmlich wird dieses Vorgehen manchmal für eine verbesserte Koexistenz mit anderen Systemen oder eine geringere Abstrahlung in einer bestimmten Frequenz zur höheren EMV-Verträglichkeit verwendet. Diese Vorteile kann die Erfindung ebenfalls nutzen, aber das ist nicht der hier diskutierte Effekt. Eine denkbare mathematische Formulierung der Frequenzspreizung ist $f(t) = f + \Delta f(t)$ mit einer zusätzlichen Frequenzspreizung $\Delta f(t)$. Der konkrete Verlauf der Frequenzspreizung in Figur 4 ist beispielhaft.

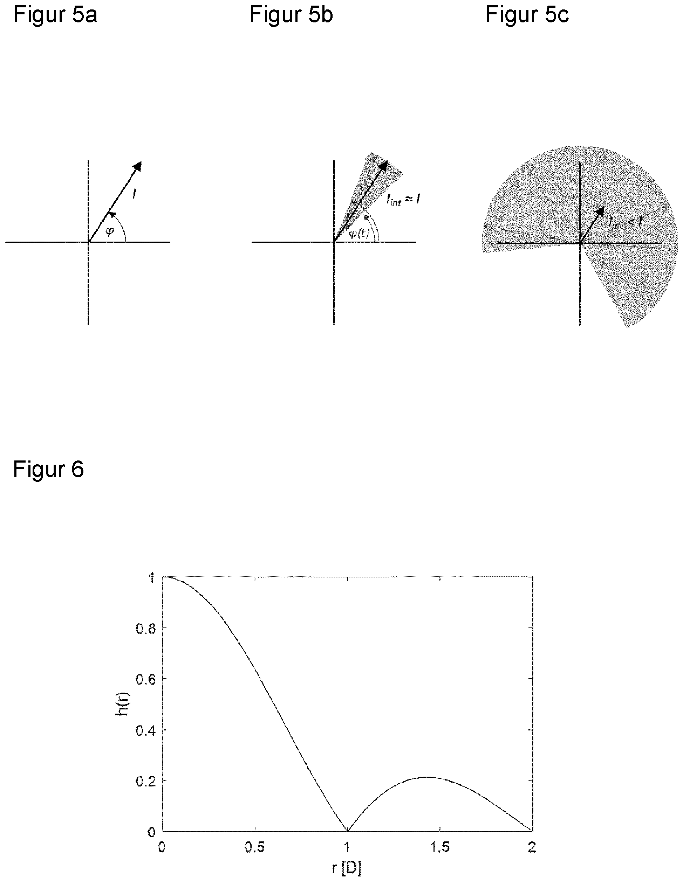

Die Figuren 5a-c veranschaulichen die Auswirkungen der Frequenzspreizung. Dabei zeigt Figur 5a die Situation ohne Frequenzspreizung, die Figur 5b bei einer moderaten Frequenzspreizung und die Figur 5c bei einer starken Frequenzspreizung. Die hellen Pfeile und die graue Hinterlegung symbolisieren das momentane Signal $\varphi(t)$, der schwarze Pfeil die zeitliche Integration darüber und somit die dafür gemessene Amplitude $I_{int}$. Die Frequenzspreizung bewirkt eine zeitliche Modulation der momentanen Phasenlage $\varphi(t)$ des empfangenen Signals, genauer: $\varphi(t) = \varphi + \Delta\varphi(t)$, mit:

$$\Delta\varphi(t) = \varphi(t) - \varphi = 4\pi(f(t) - f) * r/c = 4\pi\Delta f(t) * r/c.$$

Die Phasenmodulation $\Delta\varphi(t)$ ist also proportional zum Frequenzhub $\Delta f(t)$ und zur Entfernung des Objekts r.

In den Figuren 5a-c sind die Auswirkungen auf die momentane Phasenlage $\varphi(t)$ und die Messung, d.h. eine Integration des Empfangssignals über eine Integrationszeit hinweg, in einer Phasor-Darstellung gezeigt. Ersichtlich verringert sich die Intensität des aufintegrierten Signals $I_{int}$ im Vergleich zu einer Intensität $I$ ohne Frequenzspreizung wie in Figur 5a: $I_{int} < I$. Dabei ist das Ausmaß des Amplitudenverlusts von der Frequenzspreizung und, wie noch weiter zu erläutern, dem Abstand abhängig. Bei bekannter Frequenzspreizung ist damit den Amplituden eine zusätzliche Abstandsabhängigkeit aufgeprägt, die zur Auflösung der periodischen Mehrdeutigkeit der Phasenmessungen beziehungsweise der Zuordnung in einen Eindeutigkeitsbereich genutzt werden kann. Die Begriffe Intensität und Amplitude werden in dieser Beschreibung an vielen Stellen austauschbar verwendet.

Damit die Frequenzspreizung die weitere Auswertung gegenüber der zugrundeliegenden Modulationsfrequenz, nicht modifizierten Modulationsfrequenz f nicht verändert, sollte sich die Phasenlage $\varphi_{int}$ des über die Integrationszeit hinweg gemittelten Signals nicht verändern, d.h. es sollte $\varphi_{int} = \varphi$ gelten. Das lässt sich durch eine Frequenzspreizung $\Delta f(t)$ erreichen, die über die Integrationszeit hinweg balanciert beziehungsweise symmetrisch gestaltet ist. Beispiele für geeignete Frequenzspreizungen $\Delta f(t)$ sind eine Rampe oder ein Sinusverlauf, die innerhalb der Integrationszeit ein- oder mehrfach in einer oder beiden Richtungen den durch die Frequenzspreizung eröffneten Schwankungsbereich durchlaufen. In Figur 4 wurde eine in beide Richtungen auf- und ablaufende Rampe als eines dieser Beispiele illustriert.

Figur 6 zeigt einen beispielhaften Verlauf des normierten Amplitudenverlusts $h(r)$ durch die Frequenzspreizung in Abhängigkeit vom Abstand r in Einheiten des Eindeutigkeitsbereichs D. Ohne eine Frequenzspreizung, und idealisiert ohne verzerrende Effekte beispielsweise durch Mehrwegeausbreitung oder Bewegungsartefakte, ist eine abstandsabhängige Intensität oder Amplitude gemäß

$$I(r) = R * g(r) * A$$

zu erwarten. Dabei ist R das Remissionsvermögen des erfassten Objekts 20, g(r) der abstandsabhängige Intensitätsverlust, typischerweise $g(r) = \frac{1}{r^2}$ , und A steht für die restlichen Abhängigkeiten wie Intensität des abgestrahlten Sendelichts 16, Modulationseffizienz und dergleichen, sollte also nicht etwa als Amplitude gelesen werden, die Amplitude ist bereits mit Intensität I bezeichnet.

Mit der Frequenzspreizung kommt für die aufintegrierte Intensität $I_{int}$ ein zusätzlicher abstandsabhängiger Amplitudenverlust hinzu:

$$I_{int}(r) = R * g(r) * h(r) * A.$$

Der zusätzliche abstandsabhängige Faktor ist die in Figur 6 dargestellte Amplitudenverlustfunktion $h(r) = I_{int}(r)/I(r)$. Sie gibt den bereinigten und normierten abstandsabhängigen Effekt nur der Frequenzspreizung auf die Amplitude beziehungsweise Intensität an.

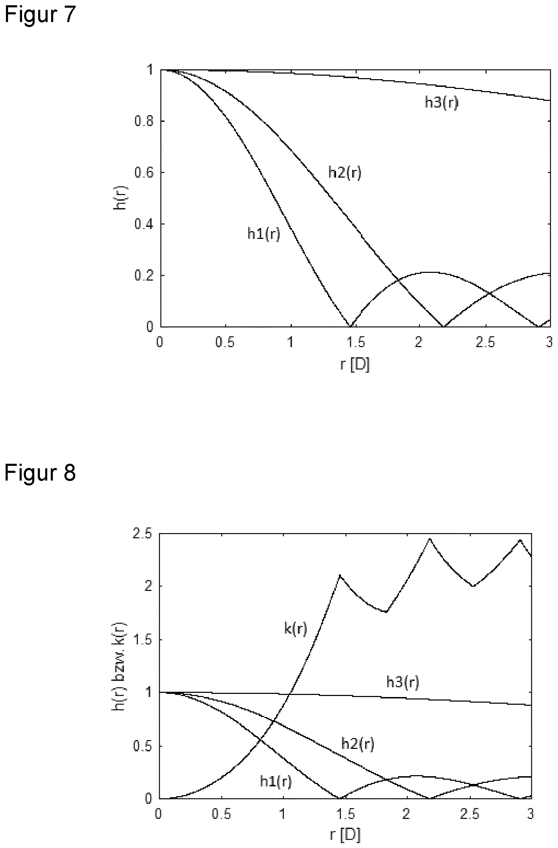

Figur 7 zeigt eine Darstellung mehrerer normierter Amplitudenverlustfunktionen $h_i(r)$ für mehrere Modulationsfrequenzen $f_i$. Wie schon mehrfach erwähnt, können mehrere unterschiedliche Messfrequenzen $f_1$, $f_2$,.. mit jeweils eigenen Eindeutigkeitsbereichen $D_1$, $D_2$,.. verwendet werden, um durch gemeinsame Auswertung der gemessenen Phasenlagen $\varphi_1$, $\varphi_2$,.. den resultierenden Eindeutigkeitsbereich D zu erhöhen, und zwar auf $D = D_1 m_1 = D_2 m_2 = ..$, mit den Ganzzahlen $m_1$, $m_2$,.. Das Grundproblem bleibt aber für den neuen Eindeutigkeitsbereich D bestehen. Verschiedene Objekte 20, 20' im gegenseitigen Abstand Vielfacher von D erzeugen die gleichen Phasenlagen, d.h. für $r = d + n * D$, $n = 0, 1,..$ ist:

$$\frac{2\pi(d + nD_1 m_1)}{D_1} = \frac{2\pi d}{D_1} + 2\pi m_1 n \equiv \varphi_1$$

$$\frac{2\pi(d + nD_2 m_2)}{D_2} = \frac{2\pi d}{D_2} + 2\pi m_2 n \equiv \varphi_2$$

Erfindungsgemäß wird auf die Modulationsfrequenzen $f_1$, $f_2$,.. die oben beschriebene Frequenzspreizung $\Delta f(t)$ angewendet. Dies ist für jede Modulationsfrequenz $f_i$ individuell wählbar. Beispielsweise wird auf alle Modulationsfrequenzen $f_i$ die gleiche Frequenzspreizung oder auf jede Modulationsfrequenz $f_i$ eine eigene, unterschiedliche Frequenzspreizung angewandt, oder in beliebigen Mischformen werden gleiche und unterschiedliche Frequenzspreizungen für die Modulationsfrequenzen $f_i$ verwendet. Es ist auch denkbar, mindestens eine oder genau eine Modulationsfrequenz $f_i$ nicht zu verändern oder überhaupt nur bei einer Modulationsfrequenz $f_i$ eine Frequenzspreizung vorzunehmen. Allerdings ist ohne Frequenzspreizung $h_i \equiv 1$ für die zugehörige Modulationsfrequenz $f_i$, die somit zu einer Zuordnung zum Eindeutigkeitsbereich nichts beiträgt beziehungsweise nur als Referenz bei einer weiter unten vorgestellten Quotientenbildung verwendbar ist. Deshalb dürfen auch nicht sämtliche Modulationsfrequenzen $f_i$ ohne Frequenzspreizung bleiben, es gäbe dann keinen für die Zuordnung zu einem Eindeutigkeitsbereich nutzbaren Amplitudenverlust.

Analog den Erläuterungen zu Figur 6 bei nur einer Modulationsfrequenz f gilt nun für mehrere Modulationsfre-

quenzen $f_i$ ohne Frequenzspreizung

$$I_1(r) = R * g(r) * A_1$$

$$I_2(r) = R * g(r) * A_2$$

...

Die Frequenzspreizung fügt einen abstandsabhängigen Amplitudenverlust Faktor $h_i(r)$ nun je Modulationsfrequenz $f_i$ hinzu:

$$I_{int,1}(r) = R * g(r) * h_1(r) * A_1$$

$$I_{int,2}(r) = R * g(r) * h_2(r) * A_2$$

Figur 7 zeigt ein Beispiel dreier Amplitudenverlustfunktionen $h_1(r)$, $h_2(r)$, $h_3(r)$ zu drei Modulationsfrequenzen $f_1$, $f_2$, $f_3$. Beispielhafte Zahlenwerte sind $f_1$=120 MHz, $f_2$=80 Mhz und $f_3$=16 MHz. Der Eindeutigkeitsbereich D beträgt hier 18,75 m entsprechend der gewählten drei Frequenzen. Die Modulationsfrequenzen $f_i$ könnten mit kleinerem gemeinsamem Teiler gewählt werden, dann ergäbe sich ein größerer Eindeutigkeitsbereich D als nur eine Verdopplung gegenüber der langsamsten Frequenz $f_3$ wie im Zahlenbeispiel. Statt einer Maximierung des Eindeutigkeitsbereichs werden in diesem Beispiel mehrere Modulationsfrequenzen $f_i$ vor allem für eine höhere Messgenauigkeit und nur teilweise einen vergrößerten Eindeutigkeitsbereich genutzt. Dieser Ausgleich zwischen Eindeutigkeitsbereich und Messgenauigkeit kann auch anders vorgenommen werden. Dazu kann vorteilhafterweise eine Wahl von Messfrequenzen getroffen und eine zugehörige Phasenrekonstruktion wie in US 2014/0049767 A1 verwendet werden. Wie auch immer der Eindeutigkeitsbereich D am Ende konkret zustande kommt, die Problematik mit der periodischen Mehrdeutigkeit resultiert in jedem Fall.

Figur 8 zeigt den Amplitudenverlustfunktionen $h_i(r)$ der Figur 7 überlagert eine zusammenfassende Amplitudenbewertungsfunktion k(r). Prinzipiell wäre es denkbar, die jeweils gemessenen Amplituden je Modulationsfrequenz $f_i$ einzeln zu bewerten, etwa anhand eines jeweiligen Kriteriums, das aus den Amplitudenverlustfunktionen $h_i(r)$ abgeleitet ist. Dabei bleiben dann aber Abhängigkeiten vom Remissionsverhalten und anderen Größen. Wesentlich einfacher zu handhaben ist die zusammenfassende Amplitudenbewertungsfunktion k(r), die sozusagen mehrere oder alle Modulationsfrequenzen $f_i$ zugleich berücksichtigt.

Ausgangspunkt sind wiederum die bereits zu Figur 7 eingeführten abstandsabhängigen integrierten Intensitäten je Modulationsfrequenz $f_i$:

$$I_{int,1}(r) = R * g(r) * h_1(r)$$

$$I_{int,2}(r) = R * g(r) * h_2(r)$$

Um die weitere Erläuterung und Auswertung zu vereinfachen, wurde hier $A_1$ = 1, $A_2$ = 1, .. angenommen. Das ist durch eine geeignete Kalibrationsmessung auch praktisch erreichbar.

Setzt man diese integrierten Intensitäten in geeigneten Kombinationen ins Verhältnis , werden die gemeinsamen Terme R und g(r) gekürzt, und es verbleibt eine durch $h_1(r)$, $h_2(r)$, .. gegebene rein abstandsabhängige Amplitudenbewertungsfunktion k(r). Das in Figur 8 gezeigte Beispiel für drei Messfrequenz $f_1$, $f_2$, $f_3$ ist:

$$k(r) = \frac{max(I_{int,1}, I_{int,2}, I_{int,3}) - min(I_{int,1}, I_{int,2}, I_{int,3})}{mean(I_{int,1}, I_{int,2}, I_{int,3})}.$$

Das ist keineswegs die einzig denkbare Amplitudenbewertungsfunktion k(r). Vorzugsweise ähneln sich andere Amplitudenbewertungsfunktionen k(r) insofern, als sie ebenfalls ein Streumaß ins Verhältnis zu einem Normierungsmaß setzen. Dabei könnte, weiterhin nicht abschließend, im Zähler eine Quadratsumme oder Standardabweichung und im Nenner eine Summe oder ein Maximum stehen. Es ist vorteilhaft, aber nicht notwendig, ein Streumaß und ein Normierungsmaß zu verwenden. Zumindest ein Quotient sollte vorzugsweise gebildet werden, damit sich der Einfluss von R * g(r) herauskürzt. Im Zähler und Nenner können aber in anderen Ausführungsformen andere Linearkombinationen oder nur einzelne Intensitäten stehen.

Die im Betrieb tatsächlich gemessenen Intensitäten oder Amplituden werden vorzugsweise ganz entsprechend miteinander verrechnet, also ein Quotient von einzelnen Intensitäten, Linearkombinationen oder aus einem Streumaß und einem Normierungsmaß gebildet, vorzugsweise nach der gleichen Vorschrift wie für die Amplitudenbewertungsfunktion $k(r)$. Durch Vergleich zwischen dem Resultat dieser Verrechnung der gemessenen Amplituden mit $k(r)$ lässt sich dann das Mehrdeutigkeitsproblem auflösen. Ob es möglich ist, eine, mehrere oder alle Mehrdeutigkeiten aufzulösen, hängt nicht allein von der Funktion $k(r)$ ab, sondern daneben von der erreichbaren Messgenauigkeit und Störeffekten wie Mehrwegeausbreitung oder Bewegungsartefakten.

Statt gemessene Amplituden oder daraus abgeleitete Werte mit der Amplitudenbewertungsfunktion $k(r)$ selbst zu vergleichen, wird vorzugsweise zur Vereinfachung der Auswertung anhand der Amplitudenbewertungsfunktion $k(r)$ eine Schwelle festgelegt. Damit lässt sich unterscheiden, ob sich ein Objekt 20, 20' im ersten Eindeutigkeitsbereich [0, D) oder in einer größeren Entfernung r>D befindet.

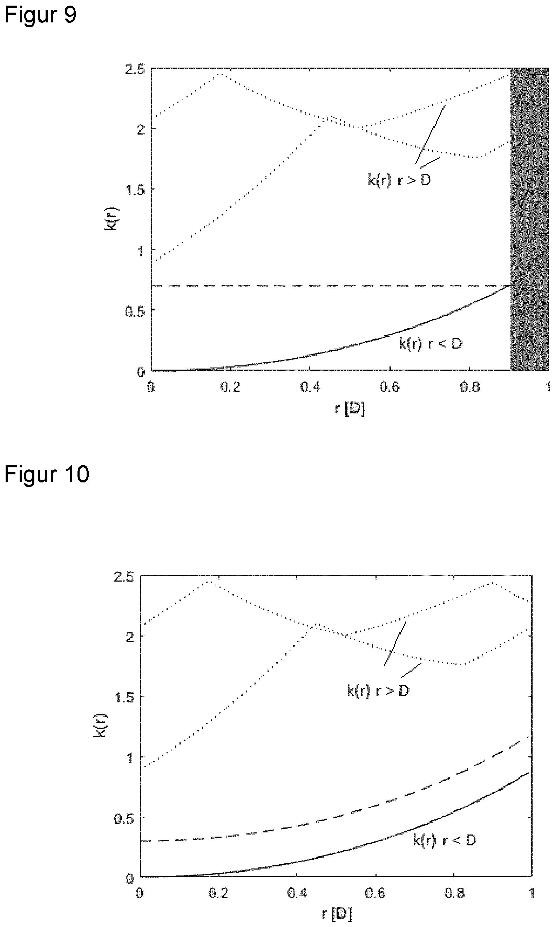

Figur 9 zeigt ein Beispiel mit einer konstanten Schwelle hier bei 0,7 entsprechend der gestrichelten horizontale Linie. Sie ist in eine Darstellung der Amplitudenbewertungsfunktion $k(r)$ gemäß Figur 8 eingezeichnet. Anders als in Figur 8 ist die Darstellung zyklisch (wrapped around), d.h. die rechts nach dem einen auf der X-Achse aufgetragenen Eindeutigkeitsbereich herauslaufende Amplitudenbewertungsfunktion $k(r)$ setzt sich dann links wieder fort, wobei die Amplitudenbewertungsfunktion $k(r)$ für den ersten Eindeutigkeitsbereich mit durchgezogener Linie und für die weiteren Eindeutigkeitsbereiche mit gepunkteter Linie gezeigt ist.

Die konstante Schwelle trennt den ersten Eindeutigkeitsbereich von den dahinterliegenden weiteren Eindeutigkeitsbereichen. Der grau hinterlegte Bereich soll andeuten, dass es hier durch Messungenauigkeiten zu Zuordnungsproblemen kommen kann. In einer bevorzugten Ausführungsform werden daher Messungen in diesem grauen Bereich für ungültig erklärt.

Figur 10 zeigt ein weiteres Beispiel mit einer nun abstandsabhängigen Schwelle, die wieder als gestrichelte Linie eingezeichnet ist und dem Verlauf der Amplitudenbewertungsfunktion $k(r)$ für eine noch trennschärfere Zuordnung in den ersten Eindeutigkeitsbereich oder einen ferneren Eindeutigkeitsbereich präziser folgt. Ansonsten entspricht Figur 10 der Figur 9, der grau hinterlegte unsichere Randbereich ist lediglich zur Vereinfachung weggelassen. Die beiden Schwellenverläufe in Figur 9 und 10 sind rein beispielhaft zu verstehen, und es sind weitere Alternativen vorstellbar, etwa stückweise konstante Schwellen, mehrere Schwellen und dergleichen.

Statt Abstandsmessungen oder Pixel zu verwerfen beziehungsweise für ungültig zu erklären, die das Schwellenkriterium für den ersten Eindeutigkeitsbereich nicht erfüllen, können die gemessenen Entfernungen um D korrigiert werden. Der Messwert r wird dazu durch r+D ersetzt. Prinzipiell ist denkbar, dass der eigentliche Abstand bei r+nD, n>1 liegt, aber das ist zum einen wegen der geringen Intensität eines derart fernen Objekts 20, 20' nicht wahrscheinlich, und außerdem genügt für sehr viele Anwendungen zu wissen, dass der Abstand jedenfalls >D ist. Mit komplexeren Auswertungen als einer einfachen Schwelle lässt sich im Übrigen bei Bedarf das n bestimmen.

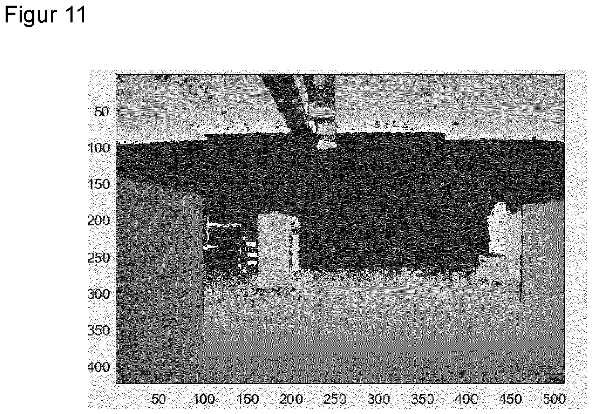

Figur 11 zeigt nochmals die beispielhafte Tiefenkarte gemäß Figur 3, nun jedoch nach erfindungsgemäßer Korrektur der Mehrdeutigkeiten. Die in Figur 3 noch umrahmten Fehlzuordnungen sind aufgelöst, das Zuordnungsproblem ist durch die Frequenzspreizung und zugehörige Auswertung der dadurch verursachten abstandsabhängigen Amplitudenverluste gelöst. Es verbleiben allenfalls noch einzelne fehlerhaft zugeordnete Pixel, die unauffällig sind und von einer Objektsegmentierung oder ähnlichen Szenenbewertung unbeachtet bleiben. Insbesondere führen sie in sicherheitstechnischer Anwendung nicht zu einer unnötigen sicherheitsgerichteten Reaktion. Alternativ könnten einzelne Fehlerpixel durch einen Filter eliminiert werden. Damit ist in sicherheitstechnischen, aber auch sonstigen Anwendungen eine hohe Detektionsempfindlichkeit, Messgenauigkeit, Messreichweite und Robustheit realisiert.

Ohne das erfindungsgemäße Vorgehen bedürfte es mindestens komplexer nachgelagerter Bildauswertungsalgorithmen, um Fehlzuordnungen des Eindeutigkeitsbereichs beispielsweise anhand von Objektbeziehungen auflösen. Das ist nicht nur aufwändig, sondern keineswegs immer zuverlässig ohne Fehler oder vereinfachende Annahmen möglich. Denkbar wäre auch, dafür zu sorgen, dass es in der Szenerie keine Objekte jenseits des ersten Eindeutigkeitsbereichs gibt, jedenfalls nicht solche mit hohem Remissionsvermögen, aber eine solche Einschränkung der Anwendung ist unerwünscht und sehr schwer zu kontrollieren.

**Patentansprüche**

1. Optoelektronische Vorrichtung (10) zur Abstandsmessung in einem Erfassungsbereich (18) mit einem phasenbasierten Lichtlaufzeitverfahren, insbesondere 3D-Lichtlaufzeit-Kamera, die eine Sendeeinrichtung (12) zum Aussenden eines Lichtsignals (16), das mit mindestens einer ersten Modulationsfrequenz $f_1$ moduliert ist, eine Empfangseinrichtung (26) mit mindestens einem Lichtempfangselement (26a) zum Erzeugen eines Empfangssignals aus dem im Erfassungsbereich (18) zurückgeworfenen Lichtsignal (22) sowie eine Steuer- und Auswertungseinheit (28) aufweist, die dafür ausgebildet ist, einen Phasenversatz zwischen ausgesandtem Lichtsignal (16) und zurückgeworfenen Lichtsignal (22) und daraus eine Lichtlaufzeit zu bestimmen sowie eine aus dem Empfangssignal bestimmte erste Amplitude zu bewerten, um eine Fehlmessung festzustellen,

**dadurch gekennzeichnet,**

**dass** die Steuer- und Auswertungseinheit (28) weiterhin dafür ausgebildet ist, eine Fehlmessung durch Reflexion des Lichtsignals (26) an einem Objekt (20') in dem Erfassungsbereich (18) außerhalb eines Eindeutigkeitsbereichs des phasenbasierten Lichtlaufzeitverfahrens zu erkennen, indem die erste Modulationsfrequenz $f_1$ während einer Lichtlaufzeitmessung in einem ersten Schwankungsbereich verändert und die sich dadurch verringerte erste Amplitude des Empfangssignals mit einer Erwartungshaltung an die erste Amplitude in einem ersten Eindeutigkeitsbereich ([0, D)) und/oder ferneren Abstandsbereichen ([D, 2D), [2D, 3D), ...) verglichen wird.

2.  Optoelektronische Vorrichtung (10) nach Anspruch 1,
    wobei die Steuer- und Auswertungseinheit (28) dafür ausgebildet ist, die mindestens erste Modulationsfrequenz $f_1$ mit einer monotonen Funktion über den ersten Schwankungsbereich zu verändern, insbesondere einer Rampe oder einem sinusförmigen Verlauf.

3.  Optoelektronische Vorrichtung (10) nach Anspruch 1 oder 2,
    wobei die Steuer- und Auswertungseinheit (28) dafür ausgebildet ist, ein Lichtsignal mit mindestens einer zweiten Modulationsfrequenz $f_2$ zu modulieren und wieder zu empfangen.

4.  Optoelektronische Vorrichtung nach (10) Anspruch 3,
    wobei die Steuer- und Auswertungseinheit (28) dafür ausgebildet ist, aus dem Empfangssignal zu der mindestens zweiten Modulationsfrequenz $f_2$ mindestens eine zweite Amplitude zu bestimmen und zu bewerten.

5.  Optoelektronische Vorrichtung (10) nach Anspruch 3 oder 4,
    wobei die Steuer- und Auswertungseinheit (28) dafür ausgebildet ist, die zweite Modulationsfrequenz $f_2$ in einem zweiten Schwankungsbereich ungleich dem ersten Schwankungsbereich zu verändern.

6.  Optoelektronische Vorrichtung (10) nach einem der vorhergehenden Ansprüche,
    wobei die Steuer- und Auswertungseinheit (28) dafür ausgebildet ist, die erste Amplitude anhand einer abstandsabhängigen Amplitudenverlustfunktion $h(r)$ des Verhältnisses der Amplitude mit veränderter Modulationsfrequenz zu Amplitude bei konstanter Modulationsfrequenz zu bewerten, insbesondere im Falle mehrerer Modulationsfrequenzen $f_i$ eine i-te Amplitude jeweils anhand einer abstandsabhängigen Amplitudenverlustfunktion $h_i(r)$ je Modulationsfrequenz $f_i$.

7.  Optoelektronische Vorrichtung (10) nach einem der vorhergehenden Ansprüche,
    wobei die Steuer- und Auswertungseinheit (28) dafür ausgebildet ist, i-te Amplituden zu mehreren Modulationsfrequenzen $f_i$ mit einer Kombinationsvorschrift miteinander zu verrechnen und anhand einer entsprechend der Kombinationsvorschrift zusammengefassten Amplitudenbewertungsfunktion $k(r)$ für alle verwendeten Modulationsfrequenzen $f_i$ zu bewerten.

8.  Optoelektronische Vorrichtung (10) nach Anspruch 7,
    wobei die Kombinationsvorschrift ein Verhältnis oder Quotient, insbesondere ein Verhältnis oder Quotient von Linearkombinationen oder aus einem Streumaß und einem Normierungsmaß ist, wobei insbesondere das Streumaß die Differenz aus einem Maximum und einem Minimum oder eine Quadratsumme und das Normierungsmaß eine Summe oder ein Mittelwert ist.

9.  Optoelektronische Vorrichtung (10) nach Anspruch 8,
    wobei die Kombinationsvorschrift nur die größte und/oder die kleinste Modulationsfrequenz berücksichtigt.

10. Optoelektronische Vorrichtung (10) nach einem der vorhergehenden Ansprüche,
    wobei die Steuer- und Auswertungseinheit (28) dafür ausgebildet ist, die Amplitude anhand einer Schwelle zu bewerten.

11. Optoelektronische Vorrichtung (10) nach Anspruch 10,
    wobei die Schwelle eine Funktion des Abstands ist.

12. Optoelektronische Vorrichtung (10) nach einem der vorhergehenden Ansprüche,
wobei die Steuer- und Auswertungseinheit (28) dafür ausgebildet ist, den gemessenen Abstand einer Fehlmessung um ein Vielfaches des Eindeutigkeitsbereichs zu korrigieren.

13. Verfahren zur Abstandsmessung in einem Erfassungsbereich (18) mit einem phasenbasierten Lichtlaufzeitverfahren, insbesondere zur Erfassung dreidimensionaler Bilddaten, bei dem ein Lichtsignal (16) ausgesandt wird, das mit mindestens einer ersten Modulationsfrequenz $f_1$ moduliert ist, ein Empfangssignal aus dem im Erfassungsbereich (18) zurückgeworfenen Lichtsignal (22) erzeugt wird, ein Phasenversatz zwischen ausgesandtem Lichtsignal (16) und zurückgeworfenem Lichtsignal (22) und daraus eine Lichtlaufzeit bestimmt wird und aus dem Empfangssignal ferner eine erste Amplitude bestimmt und bewertet wird, um eine Fehlmessung festzustellen,
**dadurch gekennzeichnet,**
**dass** eine Fehlmessung durch Reflexion des Lichtsignals (22) an einem Objekt (20') in dem Erfassungsbereich (18) außerhalb eines Eindeutigkeitsbereichs des phasenbasierten Lichtlaufzeitverfahrens erkannt wird, indem die erste Modulationsfrequenz $f_1$ während einer Lichtlaufzeitmessung in einem ersten Schwankungsbereich verändert und die sich dadurch verringerte erste Amplitude des Empfangssignals mit einer Erwartungshaltung an die erste Amplitude in einem ersten Eindeutigkeitsbereich ([0, D)) und/oder ferneren Abstandsbereichen ([D, 2D), [2D, 3D), ...) verglichen wird.

**Claims**

1. An optoelectronic apparatus (10) for distance measurement in a detection area (18) using a phase-based time-of-flight method, in particular a 3D time-of-flight camera, comprising a transmitting device (12) for transmitting a light signal (16) modulated with at least a first modulation frequency a receiving device (26) having at least one light-receiving element (26a) for generating a received signal from the reflected light signal (22) reflected in the detection region (18), and a control and evaluation unit (28) configured to determine a phase offset between the transmitted light signal (16) and the reflected light signal (22) and, from this, to determine a light time of flight, and to evaluate a first amplitude determined from the received signal in order to determine an erroneous measurement,
**characterized in that** the control and evaluation unit (28) is further configured to detect an erroneous measurement in the form of reflection of the light signal (26) at an object (20') in the detection range (18) outside a uniqueness range of the phase-based light time-of-flight method, by changing the first modulation frequency $f_1$ during a time-of-flight measurement in a first fluctuation range and comparing the thereby reduced first amplitude of the received signal with an expectation of the first amplitude in a first uniqueness range ([0, D)) and/or more distant distance ranges ([D, 2D), [2D, 3D), ...).

2. The optoelectronic apparatus (10) according to claim 1,
wherein the control and evaluation unit (28) is configured to vary the at least first modulation frequency $f_1$ with a monotonic function over the first fluctuation range, in particular a ramp or a sinusoidal curve.

3. The optoelectronic apparatus (10) according to claim 1 or 2,
wherein the control and evaluation unit (28) is configured to modulate and receive again a light signal having at least a second modulation frequency $f_2$.

4. The optoelectronic device according to (10) claim 3,
wherein the control and evaluation unit (28) is configured to determine and evaluate at least one second amplitude for the at least second modulation frequency $f_2$ from the received signal.

5. The optoelectronic apparatus (10) according to claim 3 or 4,
wherein the control and evaluation unit (28) is configured to vary the second modulation frequency $f_2$ in a second fluctuation range unequal to the first fluctuation range.

6. The optoelectronic apparatus (10) according to any of the preceding claims, wherein the control and evaluation unit (28) is configured to evaluate the first amplitude on the basis of a distance-dependent amplitude loss function $h(r)$ of the ratio of the amplitude with a changed modulation frequency to the amplitude at a constant modulation frequency, in particular in the case of a plurality of modulation frequencies $f_i$ an i-th amplitude in each case on the basis of a distance-dependent amplitude loss function $h_i(r)$ per modulation frequency $f_i$.

7. The optoelectronic apparatus (10) according to any of the preceding claims, wherein the control and evaluation unit (28) is configured to combine i-th amplitudes of a plurality of modulation frequencies $f_i$ using a combination rule and to evaluate them on the basis of an amplitude evaluation function $k(r)$, which is combined in accordance with the combination rule, for all the modulation frequencies $f_i$ used.

8. The optoelectronic apparatus (10) according to claim 7,
wherein the combination rule is a ratio or quotient, in particular a ratio or quotient of linear combinations or of a scattering measure and a normalization measure, wherein in particular the scattering measure is the difference of a maximum and a minimum or a sum of squares and the normalization measure is a sum or a mean value.

9. The optoelectronic apparatus (10) according to claim 8,
wherein the combination rule takes into account only the highest and/or the lowest modulation frequency.

10. The optoelectronic apparatus (10) according to any of the preceding claims, wherein the control and evaluation unit (28) is configured to evaluate the amplitude on the basis of a threshold.

11. The optoelectronic apparatus (10) of claim 10,
wherein the threshold is a function of distance.

12. The optoelectronic apparatus (10) according to any of the preceding claims, wherein the control and evaluation unit (28) is configured to correct the measured distance of an erroneous measurement by a multiple of the uniqueness range.

13. A method for distance measurement in a detection area (18) using a phase-based time-of-flight method, in particular for the detection of three-dimensional image data, wherein a light signal (16) is transmitted which is modulated with at least a first modulation frequency a received signal is generated from the reflected light signal (22) reflected in the detection area (18), a phase offset between the transmitted light signal (16) and the reflected light signal (22) is determined, and a light time of flight is determined therefrom, and, furthermore, a first amplitude is determined and evaluated from the received signal, in order to detect an erroneous measurement,
**characterized in that** an erroneous measurement in the form of reflection of the light signal (22) at an object (20') in the detection range (18) outside a uniqueness range of the phase-based light time-of-flight method is detected, by changing the first modulation frequency $f_1$ during a time-of-flight measurement in a first fluctuation range and comparing the thereby reduced first amplitude of the received signal with an expectation of the first amplitude in a first uniqueness range ([0, D)) and/or more distant distance ranges ([D, 2D), [2D, 3D), ...).

## Revendications

1. Dispositif optoélectronique (10) pour la mesure de distance dans une zone de détection (18) au moyen d'un procédé à temps de vol basé sur la phase, en particulier une caméra à temps de vol 3D, comprenant un dispositif d'émission (12) pour l'émission d'un signal lumineux (16) modulé avec au moins une première fréquence de modulation un dispositif de réception (26) avec au moins un élément récepteur de lumière (26a) pour la génération d'un signal de réception à partir du signal lumineux réfléchi (22) dans la zone de détection (18), ainsi qu'une unité de commande et d'évaluation (28) configurée pour déterminer un décalage de phase entre le signal lumineux (16) émis et le signal lumineux (22) réfléchi et, à partir de là, pour déterminer un temps de vol de la lumière, et pour évaluer une première amplitude déterminée à partir du signal reçu afin de déterminer une erreur de mesure,
**caractérisé en ce que** l'unité de commande et d'évaluation (28) est en outre configurée pour détecter une erreur de mesure par la réflexion du signal lumineux (26) sur un objet (20') dans la zone de détection (18) en dehors d'une zone d'unicité du procédé de temps de vol de la lumière basé sur la phase, en changeant la première fréquence de modulation $f_1$ pendant une mesure du temps de vol dans une première zone de fluctuation et en comparant la première amplitude ainsi réduite du signal reçu avec une attente de la première amplitude dans une première zone d'unicité ([0, D)) et/ou des zones de distance plus éloignées ([D, 2D), [2D, 3D), ...).

2. Dispositif optoélectronique (10) selon la revendication 1,
dans lequel l'unité de commande et d'évaluation (28) est configurée pour faire varier la au moins première fréquence de modulation $f_1$ avec une fonction monotone sur la première zone de fluctuation, en particulier une rampe ou une courbe sinusoïdale.

3. Dispositif optoélectronique (10) selon la revendication 1 ou 2,

dans lequel l'unité de commande et d'évaluation (28) est configurée pour moduler et recevoir à nouveau un signal lumineux ayant au moins une deuxième fréquence de modulation $f_2$.

4. Dispositif optoélectronique selon (10) la revendication 3,
dans lequel l'unité de commande et d'évaluation (28) est configurée pour déterminer et évaluer au moins une deuxième amplitude pour la au moins deuxième fréquence de modulation $f_2$ à partir du signal reçu.

5. Dispositif optoélectronique (10) selon la revendication 3 ou 4,
dans lequel l'unité de commande et d'évaluation (28) est configurée pour faire varier la deuxième fréquence de modulation $f_2$ dans une deuxième zone de fluctuation non égale à la première zone de fluctuation.

6. Dispositif optoélectronique (10) selon l'une des revendications précédentes, dans lequel l'unité de commande et d'évaluation (28) est configurée pour évaluer la première amplitude sur la base d'une fonction de perte d'amplitude $h(r)$ dépendant de la distance du rapport entre l'amplitude avec une fréquence de modulation modifiée et l'amplitude à une fréquence de modulation constante, en particulier dans le cas d'une pluralité de fréquences de modulation $f_i$ une i-ème amplitude à chaque fois sur la base d'une fonction de perte d'amplitude $h_i(r)$ dépendant de la distance par fréquence de modulation $f_i$.

7. Dispositif optoélectronique (10) selon l'une des revendications précédentes, dans lequel l'unité de commande et d'évaluation (28) est configurée pour combiner des i-èmes amplitudes d'une pluralité de fréquences de modulation $f_i$ en utilisant une règle de combinaison et pour les évaluer sur la base d'une fonction d'évaluation d'amplitude $k(r)$, qui est combinée conformément à la règle de combinaison, pour toutes les fréquences de modulation $f_i$ utilisées.

8. Dispositif optoélectronique (10) selon la revendication 7,
dans lequel la règle de combinaison est un rapport ou un quotient, en particulier un rapport ou un quotient de combinaisons linéaires ou d'une mesure de diffusion et d'une mesure de normalisation, dans lequel en particulier la mesure de diffusion est la différence d'un maximum et d'un minimum ou une somme de carrés et la mesure de normalisation est une somme ou une valeur moyenne.

9. Dispositif optoélectronique (10) selon la revendication 8,
dans lequel la règle de combinaison ne prend en compte que la fréquence de modulation la plus élevée et/ou la plus basse.

10. Dispositif optoélectronique (10) selon l'une des revendications précédentes, dans lequel l'unité de commande et d'évaluation (28) est configurée pour évaluer l'amplitude en fonction d'un seuil.

11. Dispositif optoélectronique (10) selon la revendication 10,
dans lequel le seuil est une fonction de la distance.

12. Dispositif optoélectronique (10) selon l'une des revendications précédentes, dans lequel l'unité de commande et d'évaluation (28) est configurée pour corriger la distance mesurée d'une erreur de mesure par un multiple de la zone d'unicité.

13. Procédé de mesure de distance dans une zone de détection (18) au moyen d'un procédé de temps de vol basé sur la phase, en particulier pour la détection de données d'image tridimensionnelles, dans lequel un signal lumineux (16) est émis qui est modulé avec au moins une première fréquence de modulation un signal de réception est généré à partir du signal lumineux (22) réfléchi dans la zone de détection (18), un décalage de phase entre le signal lumineux (16) émis et le signal lumineux (22) réfléchi est déterminé, et à partir de là un temps de vol de la lumière est déterminé, et en outre, une première amplitude est déterminée et évaluée à partir du signal de réception, afin de détecter une erreur de mesure,
**caractérisé en ce qu'**une erreur de mesure est détectée par la réflexion du signal lumineux (22) sur un objet (20') dans la zone de détection (18) en dehors d'une zone d'unicité du procédé de temps de vol de la lumière basé sur la phase, en changeant la première fréquence de modulation $f_1$ pendant une mesure du temps de vol dans une première zone de fluctuation et en comparant la première amplitude ainsi réduite du signal reçu avec une attente de la première amplitude dans une première zone d'unicité ([0, D)) et/ou des zones de distance plus éloignées ([D, 2D), [2D, 3D), ...).

## Figur 1

## Figur 2

Figur 3

Figur 4

## Figur 5a  Figur 5b  Figur 5c

## Figur 6

Figur 7

Figur 8

Figur 9

Figur 10

Figur 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140049767 A1
- EP 3736601 A1
- US 20180210070 A1
- WO 2017205170 A1
- EP 3627184 A1